Europäisches Patentamt

European Patent Office

Office européen des brevets

(11) Veröffentlichungsnummer: **0 674 256 A1**

## (12) EUROPÄISCHE PATENTANMELDUNG

(21) Anmeldenummer: **94104831.6**

(22) Anmeldetag: **26.03.94**

(51) Int. Cl.6: **G06F 7/00**, G06F 7/48

(43) Veröffentlichungstag der Anmeldung:
**27.09.95 Patentblatt 95/39**

(84) Benannte Vertragsstaaten:
**DE FR GB IT NL**

(71) Anmelder: **Deutsche ITT Industries GmbH**
**Hans-Bunte-Strasse 19**
**D-79108 Freiburg (DE)**

(72) Erfinder: **Witte, Franz-Otto**
**Schubertweg 5**
**D-79312 Emmendingen (DE)**

(74) Vertreter: **Esser, Wolfgang**
**c/o Deutsche ITT Industries GmbH**
**ITT Regional Patent Office-Europe**
**Hans-Bunte-Strasse 19**
**D-79108 Freiburg (DE)**

(54) **Verfahren zur Beschleunigung der Datenverarbeitung eines Signalprozessors.**

(57) Die Erfindung betrifft ein Verfahren zur Beschleunigung der Datenverarbeitung eines Signalprozessors, dessen, mindestens eine Arithmetikeinheit (14) und einen Multiplizierer (12) enthaltender, Signalverarbeitungseinheit (10) Eingangsdaten (EA; EB) mit n-Bit Wortlänge zugeführt werden. Werden bei einem solchen Signalprozessor von einer Quelle Eingangsdatenworte (EA, EB) mit geringerer Wortlänge als der maximalen Wortlänge von n-Bit des Signalprozessors zur Verarbeitung bereitgestellt, so müssen beim Ladevorgang nicht gültigen Bit's ausmaskiert werden. Diese Operation, ebenso wie Bitmanipulationen mit anderen Maskierungen kann beschleunigt werden, wenn der Inhalt der Eingangsdatenworte vor der Verarbeitung durch die Signalverarbeitungseinheit (10) durch mindestens eine voreinstellbare Maskierungseinheit (44, 54) in Abhängigkeit von deren Einstellung verändert werden kann.

Fig.1

Rank Xerox (UK) Business Services
(3.10/3.09/3.3.4)

Die Erfindung betrifft ein Verfahren zur Beschleunigung der Datenverarbeitung eines Signalprozessors, dessen, mindestens eine Arithmetikeinheit und einen Multiplizierer enthaltender, Signalverarbeitungseinheit Eingangsdaten mit n-Bit Wortlänge zugeführt werden.

In der Elektronik Zeitschrift Band 35 (1986) Sept., No. 18 ist auf den Seiten 112 bis 125 die Struktur und der Aufbau von Signalprozessoren, insbesondere deren Signalverarbeitungseinheit, mindestens aus einer Arithmetikeinheit und einem Multiplizierer besteht, dargestellt. Für unterschiedliche signalprozessorinterne und -externe Datenbussysteme und interne Verbindungen zwischen Arithmetikeinheit und Multiplizierer sind dort die Eingangsdatenpfade, d.h. die Wege die Eingangsdaten von ihren Quellen - interne oder externe Speichereinrichtungen wie Festwertspeichern (ROM) oder Schreib-Lesespeichern (RAM) - zu den Eingängen von Arithmetikeinheit (ALU) und/oder Multiplizierer (MUL) durchlaufen müssen, erkennbar.

Werden bei solchen Signalprozessoren von einer Quelle Eingangsdatenworte mit geringerer Wortlänge als der maximalen Wortlänge von n-Bit des Signalprozessors zur Verarbeitung bereitgestellt, so müssen beim Ladevorgang die nicht gültigen Bit's ausmaskiert werden. Diese Operation, ebenso wie Bitmanipulationen mit anderen Maskierungen können bei den dort beschriebenen Signalprozessoren nur verhältnismäßig zeitaufwendig in der Arithmetikeinheit durchgeführt werden. Insbesondere wenn Eingangsdatenworte für den Multiplizierer in dieser Art bearbeitet werden sollen, müssen diese Eingangsdaten zunächst in die Arithmetikeinheit geladen, dort bearbeitet und erst anschließend zum Eingang des Multiplizierers übertragen werden.

Es ist Aufgabe der Erfindung ein Verfahren anzugeben, mit dem die Datenverarbeitung eines Signalprozessors für solche Anwendungsfälle beschleunigt wird.

Diese Aufgabe löst die Erfindung dadurch, daß der Inhalt der Eingangsdatenworte vor der Verarbeitung durch die Signalverarbeitungseinheit durch mindestens eine voreinstellbare Maskierungseinheit in Abhängigkeit von deren Einstellung verändert werden kann.

Mit dieser, vor der eigentlichen Signalverarbeitungseinheit durchführbaren Maskierung der Eingangsdatenworte, können alle der Signalverarbeitungseinheit zugeführten Eingangsdatenworte unabhängig von der Arithmetikeinheit maskiert werden. Die Anzahl der Maskierungseinheiten die zur Durchführung dieses Verfahrens erforderlich ist, ist von der Anzahl der Eingangsdatenpfade und/oder der vom Signalprozessor verwendeten Datenbusstruktur abhängig und mindestens so groß, daß zwischen jedem Eingang des Multiplizierers und der Arithmetikeinheit, dem direkt Eingangsdatenworte aus einem ROM, RAM oder I/O-Bereich zugeführt werden können und diesen Eingangsdatenquellen eine solche Maskierungseinheit liegt. Wo eine Maskierungseinheit innerhalb des Eingangsdatenpfades bei der Realisierung plaziert wird und ob gegebenenfalls eine Maskierungseinheit in mehreren Eingangsdatenpfaden liegt, ist von der Struktur des Signalprozessors, dem bei der Realisierung entstehenden Aufwand und den Durchlaufzeitbedingungen abhängig.

Durch diese von der Arithmetikeinheit unabhängige vorgeschaltete Maskierungseinheit wird insbesondere für Eingangsdatenworte, die zum Multiplizierer gehen sollen eine erhebliche Beschleunigung erreicht, da der oben beschriebene Weg zur Maskierung über die Arithmetikeinheit vollständig entfallen kann. Die Arithmetikeinheit selbst, und damit die Ausführungszeit von Programmen, wird ebenfalls von solchen Maskierungsoperationen entlastet.

Die Maskierungseinheit kann vorzugsweise auf die folgenden Operationen voreingestellt werden:

a) setzten des Inhalts auf log. "1",

b) setzen des Inhalts auf log. "0",

c) invertieren oder negieren des Inhalts und

d) Inhalt unverändert lassen.

Wobei vorgesehen sein kann, daß diese Operationen sowohl für den Inhalt des ganzen Eingangsdatenwortes, bestimmte Teile oder für jedes einzelne Bit des Eingangsdatenwortes einzel und unabhängig voneinander voreingestellt werden können. Vorzugsweise wird eine für jedes Bit des Eingangsdatenwortes einzel und unabhängige Voreinstellung der Operation der Maskierungseinheit vorgesehen, die bei etwas größerem Realisierungsaufwand einen erheblich flexibleren Einsatz der Maskierungseinheit ermöglicht.

In einer bevorzugten Weiterbildung der Erfindung erfolgt die Voreinstellung der Maskierungseinheit durch zwei Register, die die gleiche Wortlänge aufweisen wie das Eingangsdatenwort, wobei der Inhalt der zum Eingangsdatenwort korrespondierenden Bit's der Register die gewünschte Operation der Maskierungseinheit für dieses Bit des Eingangsdatenwortes bestimmt. Die oben aufgeführten vier möglichen Operationen lassen sich durch die vier Möglichkeiten der jeweils zwei korrespondierenden Bit's der Register auswählen. Durch die Aufteilung der erforderlichen zwei Bit auf jeweils ein korrespondierendes Bit in zwei Registern wird eine einfache Zuordnung für die Voreinstellung erreicht.

Vorzugsweise erfolgt die Veränderung der Eingangsdatenworte in der Maskierungseinheit ohne Zwischenspeicherung der Eingangsdatenworte und wird mit einer möglichst schnellen Logikschaltung realisiert und so im Eingangsdatenpfad plaziert, daß die Zugriffszeiten auf Eingangsdatenworte für die Signalverarbeitungseinheit möglichst klein bleiben bzw. keine zusätzlichen Taktzyklen erforderlich werden.

Für den Programmablauf oder eine Auswertung des Inhalts der Eingangsdatenworte kann es von Vorteil sein eine von der Arithmetikeinheit unabhängige Vorzeichenfestsstellung für die Eingangsdatenworte zur Verfügung zu stellen, daher kann das erfindungsgemäße Verfahren so weitergebildet werden, daß vom Inhalt des höchstwertigen Bit's in der Maskierungseinrichtung das Vorzeichen abgeleitet und in einem Flag-Register abgespeichert wird.

Zusätzlich zur Maskierung kann beim erfindungsgemäßen Verfahren eine Schiebeoperation durchgeführt werden, die, wie eine eventuelle Maskierung des Eingangsdatenwortes, mit zur "richtigen" Positionierung eines Eingangsdatenwortes für die Verarbeitung durch die Signalverarbeitungseinheit beitragen kann.

Ein Ausführungsbeispiel der Erfindung wird im Folgenden an Hand der Zeichnungen näher erläutert. Darin zeigen:

Fig.1 ein Blockschaltbild eines Signalprozessors mit den erfindungsgemäßen Maskierungseinheiten,

Fig.2 ein Blockschaltbild einer Maskierungseinheit mit den Registern zu deren Voreinstellung.

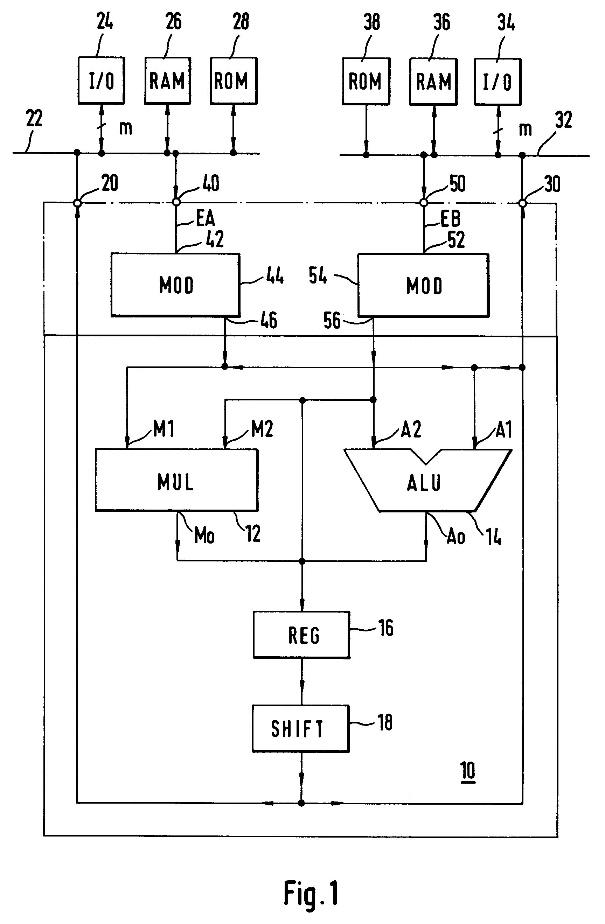

Fig.1 zeigt ein stark vereinfachtes Blockschaltbild eines Signalprozessors mit einer Signalverarbeitungseinheit 10, die aus einem Multiplizierer 12 mit den Dateneingängen M1 und M2 und einem Datenausgang Mo, einer Arithmetikeinheit 14 mit den Dateneingängen A1 und A2 und einem Datenausgang Ao, einem Registereinheit 16, deren Dateneingang mit den Datenausgängen Mo und Ao des Multiplizierers 12 und der Arithmetikeinheit 14 verbunden ist, und ein oder mehrere vom Multiplizierer 12 oder der Arithmetikeinheit 14 errechneten Ergebnisse zwischenspeichern kann, sowie einem Schieberegister 18, dessen Dateneingang mit dem Datenausgang der Registereinheit 16 verbunden ist, besteht.

Soweit nicht anders angegeben erfolgt die Verbindung zwischen den einzelnen Elementen mit einem n = 16 Bit breiten Datenbus und der Begriff Dateneingang bzw. -ausgang steht für eine dementsprechende Anzahl von Anschlüssen an den Datenbus. Die Richtung des auf einem Datenbusabschnitt möglichen Signalflusses ist durch Pfeile gekennzeichnet.

Zur Vereinfachung der Darstellung sind die für die Funktion eines Signalprozessors erforderliche Taktversorgung, die Steuerverbindungen und Adressierung der einzelnen Elemente nicht dargestellt.

Der Datenausgang des Schieberegisters 18 ist über die Ausgangsklemmen 20 bzw. 30 mit den beiden unabhängigen Datenbussystemen 22 bzw. 32 verbunden, an die jeweils ein Ein-Ausgabebereich 24 bzw. 34, ein Schreib-Lesespeicher 26 bzw. 36 und ein Festwertspeicher 28 bzw. 38 angeschlossen ist. Im Festwertspeicher 28, 38 können beispielsweise konstante Koeffizienten für eine Filterberechnung gespeichert sein, falls der Signalprozessor ein solches Programm für ein digitales Filter abarbeitet. In den Schreib-Lesespeichern können die Zwischen- und/oder Endergebnisse eines solchen Programms zur Berechnung digitaler Filter abgespeichert werden und über den Ein-Ausgabebereich können dem Signalprozessor digitalisierte Eingangsdatenfolgen zugeführt bzw. vom Signalprozessor an andere angeschlossene Peripheriebaugruppen wie z.B. Digital-Analogwandler abgegeben werden. Die beiden unabhängigen Datenbussysteme können sowohl außerhalb des Signalprozessors liegen, als auch zumindest teilweise innerhalb des Signalprozessors realisiert sein, wobei hierbei bestimmte Speicherteile (z.B. die Festwertspeicher 26, 36) sowohl ausschließlich innerhalb des Signalprozessors liegen können, als auch Speicherteile sowohl innerhalb als auch außerhalb des Signalprozessors (z.B. Teilbereiche des Schreib-Lesespeichers 26, 36 für Zwischenergebnisse oder ladbare Konstanten innerhalb des Signalprozessors und Teile des Schreib-Lesespeichers 26,36 für Endergebnisse außerhalb des Signalprozessors) liegen können.

In diesem Ausführungsbeispiel sind die beiden Ein-Ausgabebereiche 24 bzw. 34 nur über m = 8 Bit breite Datenbusabschnitte mit dem jeweiligen Datenbus 22 bzw. 32 verbunden, Eingangsdatenworte, die von diesen Ein-Ausgabebereichen 24 bzw. 34 zur Signalverarbeitungseinheit 10 gelangen sollen, müssen also immer maskiert werden.

Über Eingangsklemmen 40 bzw. 50 ist der Signalprozessor 10 mit den beiden unabhängigen Datenbussystemen 22 bzw. 32 verbunden. Von den Eingangsklemmen 40 bzw. 50 gelangen Eingangsdatenworte EA bzw. EB zu den Eingängen 42 bzw. 52 von identisch aufgebauten Maskierungseinheiten 44 bzw. 54, deren Ausgänge 46 bzw. 56 mit den Eingängen M1 und A1 bzw. M2 und A2 des Multiplizierers 12 und der Arithmetikeinheit 14 verbunden sind.

Eingangsdatenworte EA bzw. EB die von den Festwertspeichern 28 bzw. 38, den Schreib-Lesespeichern 26 bzw. 36 oder den Ein-Ausgabebereichen 24 bzw. 34 dem Multiplizierer 12 oder der Arithmetikeinheit 14 zugeführt werden sollen durchlaufen bei diesem Aufbau jeweils eine von der Arithmetikeinheit 14 unabhängige Maskierungseinheit 44 bzw. 54 in der die Eingangsdatenworte EA bzw. EB in Abhängigkeit von der Einstellung der Maskierungseinrichtung 44 bzw. 54 verändert werden können. Für Eingangsdatenworte EA bzw. EB die von den Ein-Ausgabebereichen 24 bzw. 34 stammen können in der Maskierungseinheit 44 bzw. 54 für die 8 von 16 Bit, die nicht vom 8-Bit breiten Datenbusabschnitt der Ein-Ausgabebereiche

3

24 bzw. 34 mit definierten Werten angesteuert werden feste Werte vorgegeben werden.

In diesem Ausführungsbeispiel sind die Maskierungseinheiten 44 bzw. 54 so in die Eingangsdatenpfade plaziert, daß je von jeweils einer Gruppe von Eingangsdatenpfaden verwendet werden, die an ein Datenbussystem angeschlossen sind.

Interne Rückkopplungsschleifen der Signalverarbeitungseinheit 10, wie sie in diesem Ausführungsbeispiel vom Ausgang des Schieberegisters 18 zu den Eingängen M1 und A1 des Multiplizierers 12 bzw. der Arithmetikeinheit 14 und von den Ausgängen Mo und Ao zu den Eingängen M2 und A2 des Multipizierers 12 bzw. der Arithmetikeinheit 14 geführt sind, durchlaufen nicht die Maskierungseinheiten 44 bzw. 54. Dadurch können zusätzliche Verzögerungszeiten in solchen Rückkopplungsschleifen vermieden werden, da davon ausgegangen werden kann, daß die Ausgangsdaten des Multiplizierers 12 bzw. der Arithmetikeinheit 14 in ihrer vollen Wortbreite gültig sind und gegebenenfalls erforderliche Maskierungen dieser Daten von der Arithmetikeinheit 14 selbst durchgeführt werden können.

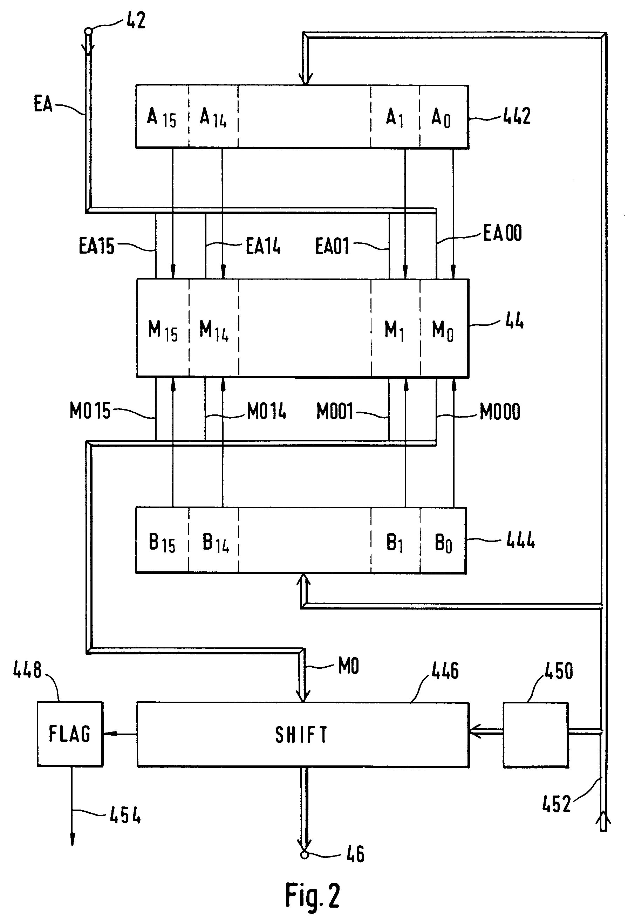

Der Aufbau einer Maskierungseinheit 44 ist in der Fig.2 als Blockschaltbild dargestellt.

Über die Eingangsklemme 42 gelangen die Eingangsdatenworte EA zu einer Maskierungseinheit 44, die aus $n = 16$ identisch aufgebauten Maskierern $M_{00}$ - $M_{15}$ besteht, an deren Dateneingängen jeweils ein Bit (EA00 bis EA15) der Eingangsdatenworte EA anliegt und deren erste Steuereingänge von den $n = 16$ Steuerausgängen eines ersten Registers 442 mit den Speicherstellen $A_0$ bis $A_{15}$ angesteuert wird.

Die zweiten Steuereingänge der Maskierungseinheit 44 werden von den $n = 16$ Steuerausgängen eines zweiten Registers 444 mit den Speicherstellen $B_0$ bis $B_{15}$ angesteuert. Beide Register 442 und 444 können über einen, in Fig.1 nicht dargestellten, Datenbus 452 vom Instruction-Decoder des Signalprozessors mit vorbestimmten Werten geladen werden, wobei der Inhalt der zum Eingangsdatenwort EA korrespondierenden Bit's der Register die gewünschte Operation der Maskierungseinheit 44 bestimmen. So wird beispielsweise im Maskierer $M_{15}$, abhängig vom Inhalt der Speicherstelle $A_{15}$ des Registers 442 und vom Inhalt der Speicherstelle $B_{15}$ des Registers 444, Bit 15 des Eingangsdatenwortes EA ( = EA15) in der folgenden Weise verändert:

| $A_{15}$ | $B_{15}$ | MO15 |
|---|---|---|
| 0 | 0 | MO15 = "0" |
| 0 | 1 | MO15 = $\overline{EA15}$ |
| 1 | 0 | MO15 = "1" |
| 1 | 1 | MO15 = EA15. |

Wobei MO15 für das Ausgangssignal des Maskierers M15 steht.

Die Ausgangssignal MO00 bis MO15 der Maskierer $M_{00}$ bis $M_{15}$ werden durch ein zusätzliches Schieberegister 446 geführt, bevor sie über die Ausgangsklemme 46 zur Signalverarbeitungseinheit 10 (Fig.1) gelangen. Im Schieberegister 446 wird vom Inhalt des höchstwertigen Bit's das Vorzeichen des Datenwortes abgeleitet wird und an ein Flag-Register 448 zur Abspeicherung weitergegeben wird. Gesteuert wird das Schieberegister 446 über ein Registers 450, das über den Datenbus 452 mit vorgegebenen Werten geladen werden kann.

## Patentansprüche

1. Verfahren zur Beschleunigung der Datenverarbeitung eines Signalprozessors, dessen, mindestens eine Arithmetikeinheit (14) und einen Multiplizierer (12) enthaltender, Signalverarbeitungseinheit (10) Eingangsdaten (EA, EB) mit n-Bit Wortlänge zugeführt werden, dadurch gekennzeichnet, daß der Inhalt dieser Eingangsdatenworte (EA, EB) vor der Verarbeitung durch die Signalverarbeitungseinheit (10) durch mindestens eine voreinstellbare Maskierungseinheit (44, 54) in Abhängigkeit von deren Einstellung verändert werden kann.

2. Verfahren nach Anspruch 1, dadurch gekennzeichnet, daß die Maskierungseinheit (44, 54) auf die folgenden Operationen voreingestellt werden kann:
   a) setzen des Inhalts auf log. "1",
   b) setzen des Inhalts auf log. "0",
   c) invertieren oder negieren des Inhalts und d) Inhalt unverändert lassen.

3. Verfahren nach Anspruch 1 oder 2, dadurch gekennzeichnet, daß die Maskierungseinheit (10) für jedes Bit (EA00 - EA15) des Eingangsdatenwortes (EA, EB) einzel und unabhängig voneinander voreingestellt werden kann.

4. Verfahren nach Anspruch 3, dadurch gekennzeichnet, daß die Voreinstellung der Maskierungseinheit (44,54) durch den Inhalt zweier Register (442, 444) erfolgt, die die gleiche Wortlänge n aufweisen wie das Eingangsdatenwort (EA, EB), wobei der Inhalt der zum Eingangsdatenwort (EA, EB) korrespondierenden Bit's der Register (442, 444) die gewünschte Operation der Maskierungseinheit (44,54) bestimmt.

5. Verfahren nach einem der vorhergehenden Ansprüche, dadurch gekennzeichnet, daß die Veränderung der Eingangsdatenworte (EA, EB) in der Maskierungseinheit (44, 54) ohne Zwischenspeicherung erfolgt.

6. Verfahren nach einem der vorhergehenden Ansprüche, dadurch gekennzeichnet, daß zusätzlich zur Maskierung vom Inhalt des höchstwertigen Bit's das Vorzeichen abgeleitet und abgespeichert wird.

7. Verfahren nach einem der vorhergehenden Ansprüche, dadurch gekennzeichnet, daß zusätzlich zur Maskierung eine Schiebeoperation durchgeführt wird kann.

8. Schaltungsanordnung zur Beschleunigung der Datenverarbeitung eines Signalprozessors, dessen, mindestens eine Arithmetikeinheit (14) und einen Multiplizierer (12) enthaltender, Signalverarbeitungseinheit (10) Eingangsdaten (EA, EB) mit n-Bit Wortlänge zugeführt werden, dadurch gekennzeichnet, daß mindestens eine voreinstellbare Maskierungseinheit (44, 54) vorgesehen ist, in der der Inhalt dieser Eingangsdatenworte (EA, EB) vor der Verarbeitung durch die Signalverarbeitungseinheit (10) in Abhängigkeit von der Voreinstellung der Maskierungseinheit (44, 54) verändert werden kann.

9. Schaltungsanordnung nach Anspruch 8, dadurch gekennzeichnet, daß die Maskierungseinheit (44,54) auf die folgenden Operationen voreinstellbar ist:
    a) setzten des Inhalts auf log. "1",
    b) setzen des Inhalts auf log. "0",
    c) invertieren oder negieren des Inhalts und
    d) Inhalt unverändert lassen.

10. Schaltungsanordnung nach Anspruch 8 oder 9, dadurch gekennzeichnet, daß die Maskierungseinheit (44, 54) für jedes Bit (EA00 - EA15, EB00-EB15) des Eingangsdatenwortes (EA, EB) einzel und unabhängig voneinander voreinstellbar ist.

11. Schaltungsanordnung nach Anspruch 10, dadurch gekennzeichnet, daß zur Voreinstellung der Maskierungseinheit (44, 54) zwei Register (442, 444) vorgesehen sind, die die gleiche Wortlänge n aufweisen wie das Eingangsdatenwort (EA, EB), wobei der Inhalt der zum Eingangsdatenwort (EA, EB) korrespondierenden Bit's der Register (442, 444) die gewünschte Operation der Maskierungseinheit (44,54) bestimmt.

12. Schaltungsanordnung nach einem der vorhergehenden Ansprüche 8 bis 11, dadurch gekennzeichnet, daß die Veränderung der Eingangsdatenworte (EA, EB) in der Maskierungseinheit (44, 54) durch eine Logikschaltung ohne Zwischenspeicherung der Eingangsdatenworte (EA, EB) erfolgt.

13. Schaltungsanordnung nach einem der vorhergehenden Ansprüche 8 bis 12, dadurch gekennzeichnet, daß zusätzlich zur Maskierung vom Inhalt des höchstwertigen Bit's das Vorzeichen abgeleitet und in einem Flag-Register (448) abgespeichert wird.

14. Schaltungsanordnung nach einem der vorhergehenden Ansprüche 8 bis 13, dadurch gekennzeichnet, daß zusätzlich zur Maskierung ein Schieberegister (446) vorgesehen ist, mit dem Schiebeoperation durchführbar sind.

15. Schaltungsanordnung nach einem der vorhergehenden Ansprüche 8 bis 14, dadurch gekennzeichnet, daß maximal eine der Anzahl der Eingangsdatenpfade entsprechende Anzahl von Maskierungseinheit (44, 54) vorgesehen ist.

Fig.1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-4 592 005 (KREGNESS) | 1-3,5, 8-10,12, 15 | G06F7/00 G06F7/48 |
| Y | * Spalte 4, Zeile 17 - Spalte 5, Zeile 61; Abbildungen 2-5 * <br> --- | 4,6,7, 11,13,14 | |
| Y | DE-A-22 33 164 (TUCHSCHEERER) <br> * Seite 8, letzter Absatz - Seite 9, Absatz 1; Abbildung 3 * <br> --- | 4,11 | |
| Y | PATENT ABSTRACTS OF JAPAN <br> vol. 10, no. 12 (P-421) 17. Januar 1986 <br> & JP-A-60 167 030 (HITACHI) <br> * Zusammenfassung * <br> --- | 6,13 | |
| Y | PHILIPS JOURNAL OF RESEARCH, <br> Bd.42, Nr.4, 23. November 1987, EINDHOVEN NL <br> Seiten 451 - 479 <br> RONSE 'On rotators and shifters' <br> * Seite 451, Zeile 1 - Zeile 13 * <br> * Absatz 2.3; Abbildung 6 * <br> --- | 7,14 | |
| A | PATENT ABSTRACTS OF JAPAN <br> vol. 16, no. 514 (P-1442) 22. Oktober 1992 <br> & JP-A-04 188 320 (MITSUBISHI) <br> * Zusammenfassung * <br> ----- | 1 | |

| RECHERCHIERTE SACHGEBIETE (Int.Cl.6) |
|---|
| G06F |

Der vorliegende Recherchenbericht wurde für alle Patentansprüche erstellt

| Recherchenort | Abschlußdatum der Recherche | Prüfer |
|---|---|---|
| DEN HAAG | 28. Juli 1994 | Cohen, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

............................................................
& : Mitglied der gleichen Patentfamilie, übereinstimmendes Dokument

EPO FORM 1503 03.82 (P04C03)